# FASCICULE DE BREVET EUROPEEN

(11) **EP 3 380 367 B1**
(45) Date de publication et mention de la délivrance du brevet: **01.01.2020**
(21) Numéro de dépôt: 16805027.6
(22) Date de dépôt: 21.11.2016
(51) Int. Cl.: B60R 21/00, B60R 21/02

(54) **VEHICULE AUTOMOBILE COMPRENANT UN ORGANE DE PROTECTION DE LA TETE DU PILOTE**
KRAFTFAHRZEUG MIT EINER SCHUTZEINRICHTUNG FÜR DEN FAHRERKOPF
VEHICLE WITH A PROTECTING ARRANGEMENT OF DRIVER'S HEAD

(30) Priorité: 23.11.2015 FR 1561260; 24.11.2015 US 201562259466 P
(43) Date de publication de la demande: 03.10.2018
(73) Titulaire: Sirgue, Jérôme, 81300 Lescure d'Albigeois (FR)
(72) Inventeur: Sirgue, Jérôme, 81300 Lescure d'Albigeois (FR)
(74) Mandataire: Argyma
(86) Numéro de dépôt international: PCT/EP2016/078347
(87) Numéro de publication internationale: WO 2017/089315

(56) Documents cités:
- DE-U1- 29 518 030
- US-A- 5 947 515
- US-A1- 2010 244 420

## Description

### DOMAINE TECHNIQUE GENERAL ET ART ANTERIEUR

La présente invention concerne le domaine de la course automobile et vise plus particulièrement un véhicule automobile comprenant un poste de pilotage ouvert et un organe de protection de la tête du pilote du véhicule.

De manière connue, un véhicule automobile pour la course automobile, tel qu'une voiture de formule 1 ou d'Indycar, comprend un châssis en carbone dans lequel est situé le poste de pilotage. Une telle voiture est connue de DE 295 018 030 U1, qui décrit un véhicule automobile comportant un châssis structural s'étendant longitudinalement d'arrière en avant et un poste de pilotage ouvert, le châssis structural comportant une ouverture permettant à un pilote du véhicule d'accéder au poste de pilotage ouvert, le véhicule comprenant un organe de protection positionné au-dessus du poste de pilotage et configuré pour protéger la tête du pilote, l'organe de protection étant monté solidairement au châssis structural.

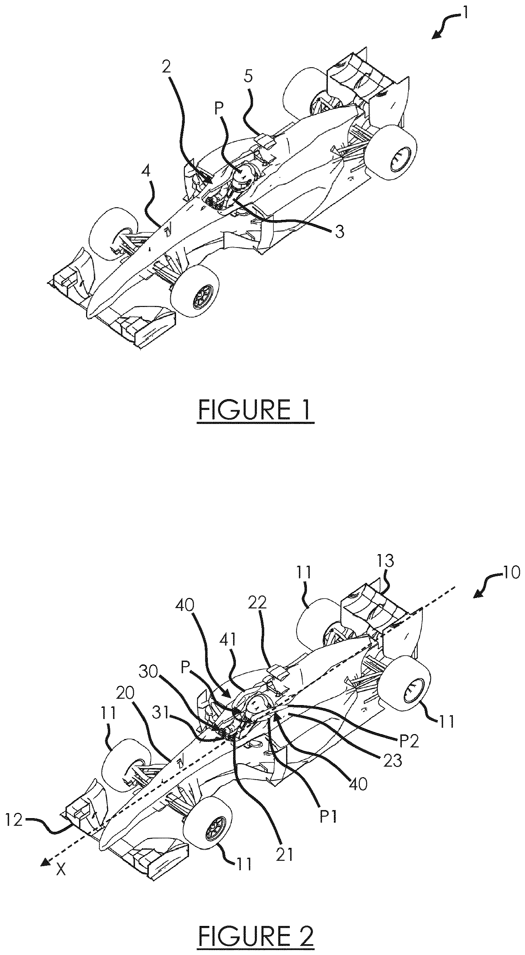

En référence à la figure 1, un pilote P du véhicule 1 accède au poste de pilotage 2 par une ouverture supérieure 3 du châssis 4 et la tête du pilote P dépasse du châssis 4 par cette ouverture 3 lorsqu'il conduit le véhicule 1. Un tel poste de pilotage 2 est dit «ouvert». La tête du pilote P est alors exposée aux chocs en cas d'accident, ce qui peut entraîner des blessures graves.

Aussi, pour protéger la tête du pilote P, le châssis 4 comprend, de manière connue, un dispositif de protection arrière 5, connu de l'homme du métier sous le nom de « arceau arrière », s'élevant plus haut que la tête du pilote P afin de protéger le pilote P en cas de retournement du véhicule 1 et permettre son extraction du poste de pilotage 2. Cependant, un tel dispositif de protection arrière 5 ne permet pas de protéger la tête du pilote P des projectiles venant de l'avant, tel que, par exemple, un pneu ou une pièce de carrosserie qui se seraient détachés d'un véhicule concurrent et viendraient heurter la tête du pilote par l'avant.

Dans l'art antérieur, il a été proposé d'installer une bulle transparente au-dessus de l'ouverture du châssis afin de protéger le pilote. Cependant, une telle solution présente de nombreux inconvénients. Tout d'abord, une bulle ne possède pas les caractéristiques mécaniques suffisantes pour résister aux chocs les plus importants. De plus, la bulle gênerait le pilote en cas de retournement du véhicule en ralentissant son extraction. La bulle poserait également un problème quant au nettoyage de projections, notamment d'huile et de gomme, sur la bulle durant une course automobile, ce qui pourrait gêner la visibilité du pilote. La bulle est également contraire à la philosophie de ces courses automobiles dans lesquels le public a l'habitude de voir la tête du pilote.

Il a également été proposé un dispositif de protection en forme de V placé devant le pilote afin de dévier tout objet venant de l'avant du véhicule. Cependant, un tel dispositif étant dans le champ de vision du pilote, la visibilité de ce dernier, notamment vers l'avant, est réduite, ce qui présente un inconvénient majeur.

L'invention a donc pour but de remédier à au moins certains de ces inconvénients en proposant une protection de la tête du pilote qui soit efficace et qui ne gêne ni la visibilité, ni l'extraction du pilote.

### PRESENTATION GENERALE DE L'INVENTION

A cet effet, l'invention concerne un véhicule automobile, en particulier pour la course automobile, comportant un châssis structural s'étendant longitudinalement d'arrière en avant et un poste de pilotage ouvert monté dans le châssis structural, le châssis structural comportant une ouverture permettant à un pilote dudit véhicule d'accéder audit poste de pilotage ouvert, l'ouverture comportant une partie avant apte à recevoir un volant et une partie arrière apte à recevoir la tête dudit pilote, le véhicule comprenant en outre au moins un organe de protection, positionné au-dessus du poste de pilotage et configuré pour protéger la tête du pilote, l'organe de protection étant monté solidairement audit châssis structural selon une pluralité de points d'ancrage,
- le point d'ancrage le plus en avant étant situé latéralement à l'ouverture et à la périphérie de sa partie arrière,
- l'organe de protection comportant au moins une portion, reliant le point d'ancrage le plus en avant à un point d'ancrage arrière, la portion (41) s'étendant en avant du point d'ancrage le plus en avant.

Grâce au véhicule selon l'invention, la tête du pilote du véhicule est protégée grâce à l'organe de protection s'étendant au-dessus de l'ouverture du poste de pilotage. De plus, la portion s'étendant en avant du point d'ancrage le plus en avant permet de protéger la tête du pilote sans gêner la visibilité du pilote. En effet, le point d'ancrage demeure en retrait du champ de vision tandis que la portion s'étend en avant pour intercepter tout projectile venant de l'avant et protéger le pilote. Enfin, une telle protection reliée au châssis peut résister à des efforts mécaniques importants lors d'un choc, ce qui permet d'assurer la protection du pilote de manière optimale.

De préférence, l'organe de protection s'étend en avant du point d'ancrage le plus en avant sur une distance supérieure à 18 cm, de préférence supérieure à 25 cm afin de protéger de manière efficace la tête du pilote d'un projectile arrivant de l'avant. Une telle distance permet d'intercepter efficacement tout projectile sans perturber la vision.

De manière préférée, l'organe de protection s'étendant en avant du point d'ancrage le plus en avant jusqu'à un sommet, la hauteur entre le point d'ancrage le plus en avant et le sommet est comprise entre 6 et 16 cm, de préférence de l'ordre de 9 cm afin de ne pas gêner la visibilité du pilote. Ainsi, le sommet de l'organe de protection est situé au-dessus du champ de vision.

De préférence, au moins une partie avant de la portion est incurvée vers le centre du véhicule afin de limiter l'espace ouvert devant le pilote, ce qui permet de limiter l'espace de passage d'objet arrivant de l'avant. De préférence, le sommet est décalé vers le centre du véhicule par rapport au point d'ancrage le plus en avant d'une distance comprise entre 7 cm et 19 cm, de préférence de l'ordre de 11 cm de manière à limiter l'espace de passage d'un projectile tout en permettant au pilote de s'extraire du véhicule par l'avant.

De manière préférée, l'organe de protection s'étend verticalement vers le haut sur une hauteur supérieure à 8 cm, de préférence de l'ordre de 12 cm afin de protéger le dessus de la tête du pilote. De préférence, l'organe de protection est incliné vers l'avant entre le sommet et le point d'ancrage arrière afin de dévier vers le haut un objet arrivant de l'avant et ainsi limiter les efforts mécaniques transmis au châssis.

Selon un aspect avantageux de l'invention, le véhicule comprend au moins deux organes de protection positionnés de chaque côté de l'ouverture afin de protéger la tête du pilote de chocs latéraux hauts. De préférence, le véhicule ne comprend que deux organes de protection.

De manière préférée, les deux organes de protection présentent une forme globale en U ouvert sur l'avant. De préférence, la distance entre les extrémités des branches du U est comprise entre 25 cm et 43 cm, de préférence de l'ordre de 29 cm. De préférence encore, les deux organes de protection sont conformés pour ménager une distance d'écartement, au niveau de la partie arrière de l'ouverture d'accès, supérieure à 43 cm, de préférence de l'ordre de 51cm, afin de permettre l'extraction du pilote assis sur son siège.

De préférence, l'organe de protection possède une structure tubulaire afin d'offrir une protection efficace et légère tout en permettant de conserver la tête du pilote visible.

Avantageusement, le véhicule comprenant un dispositif de protection latéral, le point d'ancrage arrière est solidarisé au dispositif de protection latéral afin d'augmenter la résistance mécanique de l'organe de protection lors d'un choc frontal. De préférence, le point d'ancrage le plus en avant est solidarisé audit dispositif de protection latéral afin d'augmenter la résistance mécanique de l'organe de protection lors d'un choc latéral. De manière préférée, le dispositif latéral appartient au châssis.

Selon un aspect avantageux, l'organe de protection est issu de matière du châssis afin de faciliter la fabrication de l'organe de protection tout en augmentant sa résistance mécanique. De préférence, l'organe de protection est réalisé en fibres de carbone afin qu'il présente une résistance mécanique élevé pour une masse limitée.

De préférence, l'organe de protection comporte moins de quatre points d'ancrage, de préférence uniquement deux.

De manière préférée, l'organe de protection comprenant une première portion reliant le point d'ancrage le plus en avant à un point d'ancrage arrière, l'organe de protection comprend en outre une deuxième portion s'étendant entre un point d'ancrage intermédiaire et la première portion de l'organe de protection afin de renforcer la résistance mécanique de l'organe de protection.

De manière optionnelle, le véhicule comprend en outre au moins une barre de protection reliant les deux organes de protection afin d'augmenter la protection du pilote, ladite barre de protection répartissant en outre les efforts mécaniques entre les deux organes de protection lors d'un choc.

De préférence, la barre de protection est reliée de manière amovible aux organes de protection afin de faciliter l'extraction du pilote. De préférence encore, la barre de protection est reliée en avant des points d'ancrage les plus en avant afin limiter l'espace de passage d'objet arrivant de l'avant. La barre de protection s'étend au-dessus du champ de vision du pilote et est adaptée pour intercepter un objet arrivant entre les organes de protection.

### PRESENTATION DES FIGURES

L'invention sera mieux comprise à la lecture de la description qui va suivre, donnée uniquement à titre d'exemple, et se référant aux dessins annexés sur lesquels :
- La figure 1 est une vue en perspective d'un véhicule selon l'art antérieur,
- la figure 2 est une vue en perspective d'un véhicule selon l'invention comprenant deux organes de protection et une barre de protection,
- la figure 3 est une vue de dessus du véhicule de la figure 2,
- la figure 4 est une vue de côté du véhicule de la figure 2,
- La figure 5 est une vue en perspective de deux organes de protection de la figure 2,
- La figure 6 est une vue d'un côté de l'organe de protection de la figure 5,
- La figure 7 est une vue de dessus des organes de protection de la figure 2, et
- Les figures 8 à 9 sont des vues de côté d'autres formes de réalisation d'un véhicule selon l'invention.

Il faut noter que les figures exposent l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

En référence aux figures 2 à 4, il est représenté de manière schématique une forme de réalisation d'un véhicule automobile 10 selon l'invention. Dans cet exemple, il est représenté un véhicule de course monoplace du type formule 1. Il va de soi que l'invention s'applique aux véhicules biplace ainsi qu'à tout véhicule dont le poste de pilotage est ouvert, notamment, du type Indycar formula E, Superformula, etc.

En référence à la figure 2 et de manière connue, le véhicule automobile 10 comprend un châssis 20 s'étendant longitudinalement selon un axe X, orienté de l'arrière vers l'avant, auquel sont fixées des roues 11. Dans cet exemple, le véhicule 10 comporte en outre un nez avant 12 et un aileron arrière 13.

Le châssis 20 est la structure rigide sur laquelle sont montés les différents éléments du véhicule 10 tel que les organes de transmission, de motorisation, etc. Un tel châssis 20 est adapté pour supporter des efforts mécaniques importants et permet en outre de protéger le pilote P comme cela sera présenté par la suite. Dans le domaine de la course automobile, un tel châssis 20 est, de préférence, un châssis-coque. Autrement dit, le châssis 20 est intégré à la carrosserie du véhicule 10. Un tel châssis 20 peut, par exemple, être réalisé en fibres de carbone ou en aluminium afin d'assurer une bonne rigidité du châssis 20 et de minimiser son poids. De plus, le châssis 20 peut, par exemple, être tubulaire ou moulé.

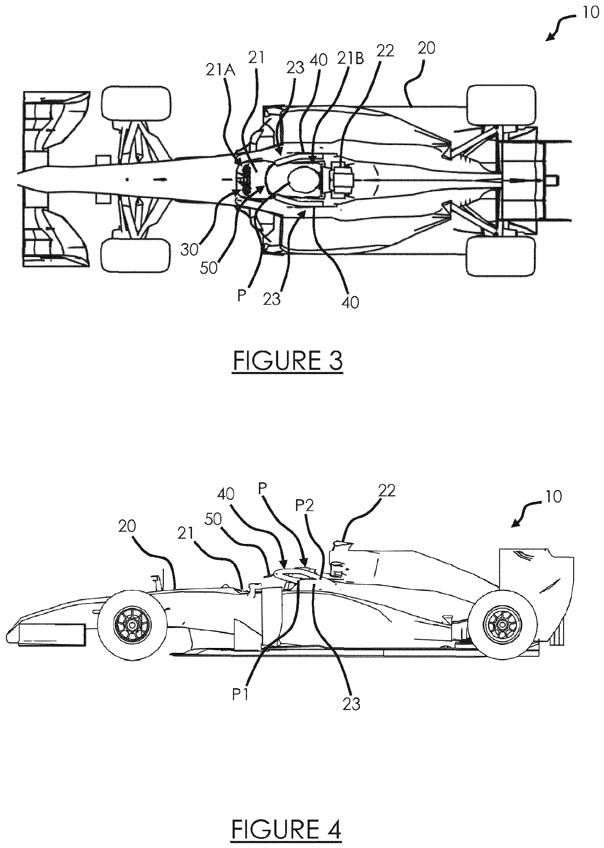

Toujours en référence à la figure 2, le châssis 20 comprend en outre une ouverture 21 permettant au pilote P d'accéder à un poste de pilotage 30. Le poste de pilotage 30 comprend un siège (non représenté) sur lequel le pilote P est assis durant une course automobile, et un volant 31 permettant de piloter le véhicule 10. Le poste de pilotage 30 est ouvert, autrement dit, lorsque le pilote P est installé dans le poste de pilotage 30, sa tête dépasse dudit poste de pilotage 30. De manière connue, le volant 31 est amovible afin de faciliter l'accès du pilote P au poste de pilotage 30. De même, le siège peut être extrait du poste de pilotage 30 avec le pilote P après un choc afin de maintenir le dos du pilote P. Le poste de pilotage 30 est situé dans le châssis 20 afin de protéger le pilote P comme cela sera présenté par la suite. En référence à la figure 3, l'ouverture 21 d'accès au poste de pilotage 30 s'étend longitudinalement d'avant en arrière et comprend une partie avant 21A, apte à recevoir le volant 31, et une partie arrière 21B apte à recevoir la tête du pilote P. De manière classique, un appui tête est monté de manière amovible au dispositif de protection latéral 23. Un tel appui tête présente une forme globale en U afin de maintenir en place la tête du pilote P à l'intérieur du poste de pilotage 30 durant une course.

Dans cet exemple, en référence aux figures 2 à 4, afin d'assurer la sécurité du pilote P, le châssis 20 comprend, d'une part, un dispositif de protection arrière 22 pour protéger le pilote P en cas de retournement du véhicule 10 et faciliter son extraction et, d'autre part, deux dispositifs de protection latérale basse 23 du pilote P afin de protéger, durant une course automobile, le pilote P en cas de choc latéral bas, c'est-à-dire, au niveau de son poste de pilotage 30, sous la tête du pilote P. Le dispositif de protection arrière 22, connu de l'homme du métier sous le nom de «arceau arrière» ou «arceau central» ou encore «arceau de sécurité», s'étend verticalement vers le haut en arrière du poste de pilotage 30. De préférence, le dispositif de protection arrière 22 s'étend sur une hauteur comprise entre 26 cm et 48 cm au-dessus du poste de pilotage 30. Dans cet exemple, le dispositif de protection arrière 22 et les dispositifs de protection latérale basse 23 sont réalisés en fibres de carbone et issus de matière du châssis 20.

En référence aux figures 2 à 4, le véhicule 10 comprend en outre deux organes de protection 40, positionnés au-dessus du poste de pilotage 30 et de chaque côté de l'ouverture 21. De tels organes de protection 40 sont configurés pour protéger la tête du pilote P sans perturber son champ de vision. Par «champ de vision» du pilote, on entend le champ de vision principal du pilote, autrement dit lorsqu'il regarde vers l'avant du véhicule. Ainsi, les organes de protection 40 ne perturbent pas son champ de vision en lui laissant la vue sur la route. Les deux organes de protection 40 sont positionnés symétriquement de part et d'autre de l'ouverture 21 et présentent, de préférence, une forme similaire symétriquement. Aussi, par souci de clarté et de concision, un unique organe de protection 40 va maintenant être décrit et l'ensemble des deux organes de protection 40 sera décrit par la suite.

Selon une première forme de réalisation, toujours en référence aux figures 2 à 4, l'organe de protection 40 est monté solidairement audit châssis structural 20 selon une pluralité de points d'ancrage. Dans cet exemple, l'organe de protection 40 est fixé au châssis 20 en deux points d'ancrage P1, P2 : un point d'ancrage avant P1 situé latéralement à l'ouverture 21, de préférence au niveau d'un dispositif de protection latéral 23, de préférence encore à l'avant du dispositif de protection latéral 23 et un point d'ancrage arrière P2 situé latéralement à l'ouverture 21, de préférence au niveau d'un dispositif de protection latéral 23, de préférence encore à l'arrière du dispositif de protection latéral 23. Avantageusement, le point d'ancrage avant P1 est situé latéralement à la tête du pilote P afin d'être hors de son champ de vision.

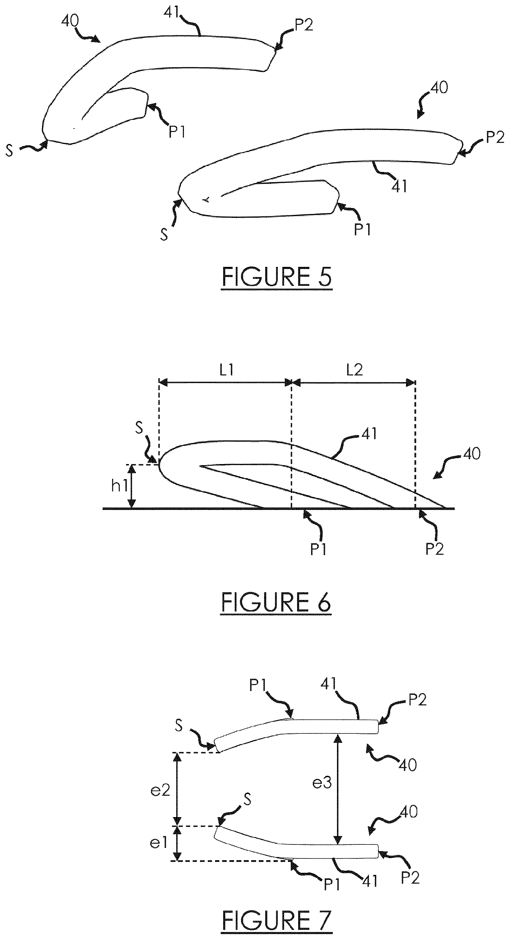

Comme illustré aux figures 5 à 7, l'organe de protection 40 comporte une première portion 41, reliant le point d'ancrage avant P1 au point d'ancrage arrière P2. Autrement dit, la première portion 41 est coudée. La première portion 41 s'étend, jusqu'à un sommet S, en avant du point d'ancrage avant P1, de préférence à une distance longitudinale L1 supérieure à 18 cm, de préférence de l'ordre de 27 cm comme illustré à la figure 6. L'angle d'ouverture de la première portion 41 au niveau du sommet S est compris entre 25° et 35°, de préférence de l'ordre de 29°. Dans cet exemple, le coude de la première portion 41 est ouvert mais il va de soi qu'il pourrait être plein, notamment, pour des impératifs aérodynamiques ou esthétiques.

La première portion 41 s'étend verticalement vers le haut depuis le point d'ancrage avant P1 jusqu'au sommet S sur une hauteur h1 comprise entre 6 cm et 16 cm, de préférence de l'ordre de 9cm. Ainsi, le sommet S, bien que situé en avant du point d'ancrage avant P1, protège la tête du pilote P sans gêner son champ de vision du fait que le sommet S s'étend en avant et en hauteur du point d'ancrage avant P1. En particulier, le sommet S s'étend au-dessus du champ de vision du pilote P. Ainsi, l'organe de protection 40 s'étend au-dessus de la tête du pilote P afin de le protéger. Dans cet exemple, la première portion 41 s'étend horizontalement vers l'arrière du sommet S, puis s'étend obliquement vers le bas jusqu'au point d'ancrage arrière P2. Il va de soi que la première portion 41 pourrait s'étendre obliquement vers le bas du sommet S jusqu'au point d'ancrage arrière.

De plus, la première portion 41 s'étend en arrière du point d'ancrage avant P1, sur une distance L2 comprise entre 6 cm et 38 cm en fonction du type de véhicule. L'organe de protection 40 forme ainsi une protection latérale haute pour le pilote P.

Ainsi, la première portion 41 comporte une première partie, située entre le point d'ancrage avant P1 et le sommet S, et une deuxième partie, située entre le sommet S et le point d'ancrage arrière P2. De préférence et en référence à la figure 7, la distance latérale e1 entre le sommet S et le point d'ancrage avant est compris entre 7 cm et 19 cm, de préférence de l'ordre de 11 cm de manière à ce que le sommet S soit positionné vers le centre du véhicule 10 par rapport au point d'ancrage avant P1 de manière à protéger le pilote P comme cela sera présenté par la suite tout en déviant vers le côté les objets venant de l'avant.

De préférence, l'organe de protection 40 se présente sous la forme d'une structure tubulaire. Dans cet exemple, la première portion 41 de l'organe de protection 40 possède une section sensiblement rectangulaire. Il a été présenté un organe de protection 40 présentant une section rectangulaire cependant il va de soi que toute autre section, par exemple circulaire, pourrait convenir. Une telle structure tubulaire est discrète et n'impacte pas visuellement l'esthétique des véhicules automobiles. En particulier, le pilote P demeure visible depuis l'extérieur du véhicule 10 malgré la présence de l'organe de support 40. Selon un premier mode de réalisation, la structure tubulaire est pleine afin d'optimiser la résistance mécanique de l'organe de protection 40. Selon un deuxième mode de réalisation, la structure tubulaire est creuse afin de limiter la masse de l'organe de protection 40 tout en présentant une résistance mécanique élevée.

Selon un aspect préféré de l'invention, l'organe de protection 40 est issu de matière du châssis 20 afin d'assurer la transmission des efforts tout en rendant la fabrication d'un tel organe de protection 40 aisée. Ainsi, un tel organe de protection 40, de préférence réalisé en fibre de carbone, est léger tout en présentant une résistance importante aux efforts mécaniques. De manière avantageuse, tout effort mécanique reçu par l'organe de protection 40 est ainsi transmis au châssis 20, les efforts mécaniques étant alors absorbés de manière optimale par le véhicule 10. Il a été présenté un organe de protection 40 issu de matière du châssis 20, cependant il va de soi que l'organe de protection 40 pourrait être fixé de manière amovible au châssis 20, par exemple pour permettre le réglage de la position de l'organe de protection 40 par rapport à la morphologie du pilote P.

Vus de dessus, les deux organes de protection 40 présentent ensemble une forme globale en U au-dessus de l'ouverture 21 comme illustré à la figure 7. Une telle forme en U est ouverte vers l'avant au niveau des sommets S des organes de protection 40. Une telle ouverture sur le devant permet de laisser le champ de vision du pilote P dégagé tout en permettant l'extraction du pilote P vers l'avant du véhicule 10. On définit une distance d'ouverture avant e2, comprise entre 25 cm et 43 cm, de préférence de l'ordre de 29 cm, qui correspond à la distance latérale entre les sommets S des deux organes de protection 40, c'est-à-dire, la distance entre les extrémités des branches du U comme illustré à la figure 7.

Avantageusement, la distance d'ouverture avant e2 est la distance la plus faible entre les deux organes de protection 40. Une telle distance d'ouverture avant e2 est réduite grâce à l'incurvation latérale vers le centre du véhicule 10 des organes de protection 40. Une telle distance d'ouverture avant e2 permet avantageusement de limiter la zone de passage d'objets entre les sommets S. La distance entre les deux organes de protection 40 est plus importante au niveau de la tête du pilote P afin de faciliter son extraction comme cela va maintenant être présenté.

L'ensemble des organes de protection 40 est ouvert sur le dessus afin de permettre l'extraction du pilote P par le dessus du véhicule 10. Toujours en référence à la figure 7, la forme en U des deux organes de protection 40 s'élargie d'avant en arrière, de préférence jusqu'à obtenir au niveau du siège une distance latérale e3 entre les deux organes de protection 40 comprise entre 43 cm et 60 cm, de préférence de l'ordre de 51 cm afin de permettre, si nécessaire, l'extraction du pilote P sur son siège de manière à maintenir son dos suite à un choc important. Une telle forme en U resserrée sur l'avant permet d'augmenter la protection avant du pilote P tout en facilitant l'extraction du pilote P.

De manière optionnelle et en référence aux figures 3 et 4, le véhicule automobile 10 comprend en outre au moins une barre de protection 50 montée entre les deux organes de protection 40 afin de renforcer la protection avant de la tête du pilote P tout en conservant la visibilité du pilote P sur la route, du fait du placement en hauteur d'une telle barre de protection 50. Une telle barre de protection 50 permet également de répartir les efforts mécaniques entre les deux organes de protection en cas de choc latéral au niveau d'un des organes de protection 40. De préférence, la barre de protection 50 est réalisée en titane afin d'être résistante à des efforts mécaniques importants. La barre de protection 50 peut également posséder une section analogue à celle de l'organe de protection 40 ou inférieure à cette dernière. De préférence encore, la barre de protection 50 est reliée à chaque organe de protection 40 au voisinage de son sommet S afin de ne pas être dans le champ de vision du pilote P. Avantageusement, la barre de protection 50 est montée de manière amovible afin de faciliter l'extraction du pilote P en enlevant la barre de protection. De préférence, la barre de protection 50 s'étend dans un plan oblique par rapport au plan horizontal, de préférence oblique vers le bas. Il va de soi que la barre de protection 50 pourrait s'étendre dans un plan sensiblement horizontal.

Il a été présenté un véhicule automobile 10 comprenant deux organes de protection 40, cependant, il va de soi que les deux organes de protection 40 pourraient être reliés au niveau de leur point d'ancrage arrière P2 afin de former un unique organe de protection présentant une forme globale en U. De plus, il a été présenté un organe de protection 40 relié au châssis 20 en seulement deux points d'ancrage P1, P2 : le point d'ancrage avant P1 et le point d'ancrage arrière P2. Cependant, il va de soi que l'organe de protection 40 pourrait être relié au châssis 20 en plus de deux points d'ancrage comme cela sera présenté par la suite.

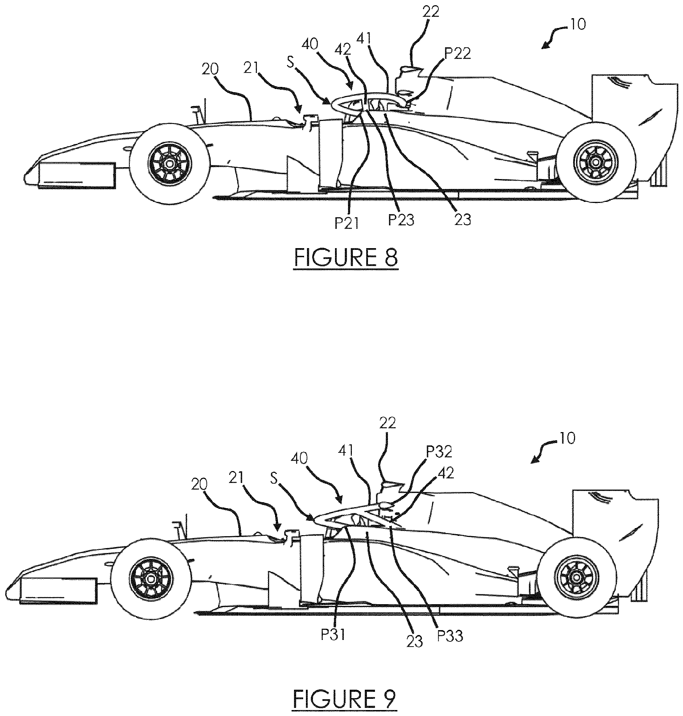

Selon une deuxième forme de réalisation et en référence à la figure 8, le point d'ancrage arrière P22 est situé au niveau du dispositif de protection arrière 22. Dans cette forme de réalisation, la première portion 41 s'étend, au moins en partie, verticalement vers le haut entre le sommet S et le point d'ancrage arrière P2.

La première portion 41 est ainsi au moins partiellement croissante en hauteur entre le point d'ancrage avant P21 et le point d'ancrage arrière P22, de préférence, strictement croissante. Dans cet exemple, la première portion 41 s'étend verticalement vers le haut depuis le point d'ancrage avant P21 sur une hauteur comprise entre 9 cm et 29 cm. Avantageusement, la première portion 41 est, au moins en partie, inclinée vers l'avant par rapport au plan horizontal afin de dévier un objet venant de l'avant du véhicule 10 vers le haut, ceci afin de limiter les efforts mécaniques transmis au châssis 20 lors du choc avec l'objet.

Toujours en référence à la figure 8, l'organe de protection 40 est en outre fixé au châssis 20 en au moins un troisième point d'ancrage : un point d'ancrage intermédiaire P23 situé entre le point d'ancrage avant P21 et le point d'ancrage arrière P22. L'organe de protection 40 comporte ainsi une deuxième portion 42 s'étendant sensiblement verticalement depuis le point d'ancrage intermédiaire P23 jusqu'à la première portion 41. La deuxième portion 42 est reliée à la première portion 41 au niveau d'un point de liaison afin de renforcer l'organe de protection 40 en cas de choc. Le point de liaison est situé dans une zone médiane de la première portion 41 afin de former une protection latérale complémentaire en cas de choc. Avantageusement, la deuxième portion 42 de l'organe de protection 40 présent une section similaire à la section de la première portion 41 afin de faciliter la fabrication des deux portions 41, 42 de l'organe de protection 40.

Il a été présenté un point d'ancrage intermédiaire P23 distinct du point d'ancrage avant 41, cependant, il va de soi qu'ils pourraient être confondus, la deuxième portion 42 reliant ainsi le point d'ancrage avant P21 à la première portion 41 au niveau de sa zone médiane. De même, Il a été présenté un organe de protection 40 relié au châssis 20 en trois points d'ancrage P21, P22, mais il va de soi qu'il pourrait être relié en seulement deux points d'ancrage comme cela a été présenté précédemment afin de limiter la masse de l'organe de protection 40. Enfin, il a été présenté une deuxième portion 42 s'étendant verticalement, cependant, il va de soi qu'elle pourrait s'étendre de manière oblique par rapport au plan vertical.

Selon une troisième forme de réalisation et en référence à la figure 9, l'angle d'ouverture de chaque organe de protection 40 au niveau de son sommet S est, de préférence, inférieur à 35°. Autrement dit, vue de côté, l'organe de protection 40 présente une forme pointue au niveau de son sommet S afin de faciliter la déviation des objets vers le haut. De plus, la première portion 41 de l'organe de protection est strictement croissante en hauteur entre le point d'ancrage avant P31 et le point d'ancrage arrière P32 afin d'optimiser la déviation des objets vers le haut.

Enfin, la deuxième portion 42 de l'organe de protection s'étend vers l'avant depuis le point d'ancrage intermédiaire P33 situé au niveau d'une partie arrière du dispositif de protection latérale 23 afin d'augmenter la résistance mécanique de l'organe de protection 40 en cas de choc frontal. Cependant, il va de soi que le point d'ancrage intermédiaire P33 pourrait être situé au niveau d'une partie avant du dispositif de protection latérale 23, la deuxième portion 42 pouvant alors s'étendre vers l'arrière.

Dans cette troisième forme de réalisation, l'organe de protection 40 est relié au châssis 20 en trois points d'ancrage P31, P32, P33, mais il va de soi qu'il pourrait être relié en seulement deux points d'ancrage comme cela a été présenté précédemment afin de limiter la masse de l'organe de protection 40.

## Revendications

1. Véhicule automobile (10), en particulier pour la course automobile, comportant un châssis structural (20) s'étendant longitudinalement d'arrière en avant et un poste de pilotage ouvert (30) monté dans le châssis structural (20), le châssis structural (20) comportant une ouverture (21) permettant à un pilote (P) dudit véhicule (10) d'accéder audit poste de pilotage ouvert (30), l'ouverture (21) comportant une partie avant (21A) apte à recevoir un volant (31) et une partie arrière (21B) apte à recevoir la tête dudit pilote (P), le véhicule (10) comprenant en outre au moins un organe de protection (40), positionné au-dessus du poste de pilotage (30) et configuré pour protéger la tête du pilote (P), l'organe de protection (40) étant monté solidairement audit châssis structural (20) selon une pluralité de points d'ancrage,
- le point d'ancrage (P1, P21, P31) le plus en avant étant situé latéralement à l'ouverture (21) et à la périphérie de sa partie arrière (21B),
- l'organe de protection (40) comportant au moins une portion (41), reliant le point d'ancrage le plus en avant (P1, P21, P31) à un point d'ancrage arrière (P2, P22, P32), la portion (41) s'étendant en avant du point d'ancrage le plus en avant (P1).

2. Véhicule (10) selon la revendication 1 dans lequel l'organe de protection (40) s'étend en avant du point d'ancrage le plus en avant (P1, P21, P31) sur une distance (L1) supérieure à 18 cm.

3. Véhicule (10) selon l'une des revendications précédentes, dans lequel l'organe de protection (40) s'étendant en avant du point d'ancrage le plus en avant (P1) jusqu'à un sommet (S), la hauteur (h1) entre le point d'ancrage le plus en avant (P1, P21, P31) et le sommet (S) est comprise entre 6 et 16 cm.

4. Véhicule (10) selon l'une des revendications précédentes, dans lequel au moins une partie avant de la portion (41) est incurvée vers l'ouverture (21).

5. Véhicule (10) selon l'une des revendications précédentes, comprenant au moins deux organes de protection (40) positionnés de chaque côté de l'ouverture (21).

6. Véhicule (10) selon la revendication 5, dans lequel les deux organes de protection (40) présentent une forme globale en U ouvert sur l'avant.

7. Véhicule (10) selon la revendication précédente, dans lequel la distance entre les extrémités des branches du U est comprise entre 25 cm et 43 cm.

8. Véhicule (10) selon l'une des revendications précédentes, dans lequel l'organe de protection (40) est issu de matière du châssis (20), de préférence réalisé en fibres de carbone.

9. Véhicule (10) selon l'une des revendications précédentes, dans lequel l'organe de protection (40) comprenant une première portion (41) reliant le point d'ancrage le plus en avant (P1, P21, P31) à un point d'ancrage arrière (P2, P22, P32), l'organe de protection (40) comprend en outre une deuxième portion (42) s'étendant entre un point d'ancrage intermédiaire (P23, P33) et la première portion (41) de l'organe de protection (40).

10. Véhicule (10) selon l'une des revendications 1 à 9 dans lequel l'organe de protection (40) possède une structure tubulaire.

## Patentansprüche

1. Kraftfahrzeug (10), insbesondere für ein Autorennen, umfassend ein strukturelles Fahrgestell (20), das sich in Längsrichtung von hinten nach vorn erstreckt, und ein offenes Cockpit (30), der in dem strukturellen Fahrgestell (20) montiert ist, wobei das strukturelle Fahrgestell (20) eine Öffnung (21) umfasst, die einem Piloten (P) des genannten Fahrzeugs (10) das Zugreifen auf das genannte offene Cockpit (30) erlaubt, wobei die Öffnung (21) einen vorderen Teil (21A) umfasst, der zum Aufnehmen eines Steuerrades (31) geeignet ist, und eines hinteren Teils (21B), der zum Aufnehmen des Kopfes des genannten Piloten (P) geeignet ist, wobei das Fahrzeug (10) darüber hinaus wenigstens ein Schutzorgan (40) umfasst, das oberhalb des Cockpits (30) positioniert und gestaltet ist, um den Kopf des Piloten (P) zu schützen, wobei das Schutzorgan (40) gemäß einer Vielzahl von Verankerungspunkten fest mit dem genannten strukturellen Fahrgestell (20) montiert ist,
- wobei der vorderste Verankerungspunkt (P1, P21, P31) lateral an der Öffnung (21) und an der Peripherie seines hinteren Teils (21B) angeordnet ist;
- wobei das Schutzorgan (40) wenigstens einen Abschnitt (41) umfasst, der den vordersten Verankerungspunkt (P1, P21, P31) mit einem hinteren Verankerungspunkt (P2, P22, P32) verbindet, wobei sich der Abschnitt (41) vorne vom vordersten Verankerungspunkt (P1) erstreckt.

2. Fahrzeug (1) gemäß Anspruch 1, wobei das Schutzorgan (40) sich vorne am vordersten Verankerungspunkt (P1, P21, P31) über eine Entfernung (L1) von mehr als 18 cm erstreckt.

3. Fahrzeug (10) gemäß einem der voranstehenden Ansprüche, wobei das Schutzorgan (40) sich vorne am vordersten Verankerungspunkt (P1) bis zu einer Spitze (S) erstreckt, die Höhe (h1) zwischen dem vordersten Verankerungspunkt (P1, P21, P31) und der Spitze (S) ist zwischen 6 und 16 cm.

4. Fahrzeug (10) gemäß einem der voranstehenden Ansprüche, wobei wenigstens ein vorderer Teil des Abschnitts (41) zur Öffnung (21) gekrümmt ist.

5. Fahrzeug (10) gemäß einem der voranstehenden Ansprüche, umfassend wenigstens zwei Schutzorgane (40), die auf jeder Seite der Öffnung (21) positioniert sind.

6. Fahrzeug (10) gemäß Anspruch 5, wobei die zwei Schutzorgane (40) eine allgemeine, an der Vorderseite offene U-Form aufweisen.

7. Fahrzeug (10) gemäß dem voranstehenden Anspruch, wobei die Entfernung zwischen den Enden der Zweige des Us zwischen 25 cm und 43 cm inbegriffen ist.

8. Fahrzeug gemäß einem der voranstehenden Ansprüche, wobei das Schutzorgan (40) aus Material des Fahrgestells (20) hervorgegangen ist, bevorzugt aus Kohlefasern hergestellt ist.

9. Fahrzeug (10) gemäß einem der voranstehenden Ansprüche, wobei das Schutzorgan (40) einen ersten Abschnitt (41) umfasst, der den vordersten Verankerungspunkt (P1, P21, P31) mit einem hinteren Verankerungspunkt (P2, P22, P32) verbindet, das Schutzorgan (40) darüber hinaus einen zweiten Abschnitt (42) umfasst, der sich zwischen einem Zwischen-Verankerungspunkt (P23, P33) und dem ersten Abschnitt (41) des Schutzorgans (40) erstreckt.

10. Fahrzeug (10) gemäß einem der Ansprüche 1 bis 9, wobei das Schutzorgan (40) eine röhrenförmige Struktur besitzt.

## Claims

1. An automobile vehicle (10), in particular for automobile racing, comprising a structural frame (20) extending longitudinally from back to front and an open cockpit (30) mounted in the structural frame (20), the structural frame (20) comprising an opening (21) enabling a driver (P) of said vehicle (10) to gain access to said open cockpit (30), the opening (21) comprising a front part (21A) able to receive a steering wheel (31) and a back part (21B) able to receive the head of said driver (P), the vehicle (10) further comprising at least one protection member (40), positioned above the cockpit (30) and configured to protect the head of the driver (P), the protection member (40) being mounted integral with said structural frame (20) at a plurality of anchor points,
- the most in the front anchor point (P1, P21, P31) being located sideways relative to the opening (21) and at the periphery of its back part (21B),
- the protection member (40) comprising at least one portion (41), connecting the most in the front anchor point (P1, P21, P31) to a back anchor point (P2, P22, P32), the portion (41) extending forwardly of the most in the front anchor point (P1).

2. The vehicle (10) according to claim 1, wherein the protection member (40) extends forwardly of the most in the front anchor point (P1, P21, P31) over a distance (L1) higher than 18cm.

3. The vehicle (10) according to one of the preceding claims, wherein the protection member (40) extending forwardly of the most in the front anchor point (P1) up to an apex (S), the height (h1) between the most in the front anchor point (P1, P21, P31) and the apex (S) is between 6 and 16cm.

4. The vehicle (10) according to one of the preceding claims, wherein at least a front part of the portion (41) is curved towards the opening (21).

5. The vehicle (10) according to one of the preceding claims, comprising at least two protection members (40) positioned on either side of the opening (21).

6. The vehicle (10) according to claim 5, wherein the two protection members (40) have a generally frontwardly open U-shape.

7. The vehicle (10) according to the preceding claim, wherein the distance between the ends of the branches of the U is between 25cm and 43cm.

8. The vehicle (10) according to one of the preceding claims, wherein the protection member (40) is made as a single piece with the frame (20), preferably made of carbon fibers.

9. The vehicle (10) according to one of the preceding claims, wherein the protection member (40) comprising a first portion (41) connecting the most in the front anchor point (P1, P21, P31) to a back anchor point (P2, P22, P32), the protection member (40) further comprises a second portion (42) extending between an intermediate anchor point (P23, P33) and the first portion (41) of the protection member (40).

10. The vehicle (10) according to one of claims 1 to 9, wherein the protection member (40) has a tubular structure.
